# EUROPÄISCHE PATENTANMELDUNG

(11) **EP 0 723 971 A2**
(43) Veröffentlichungstag der Anmeldung: **31.07.1996**
(21) Anmeldenummer: 95120124.3
(22) Anmeldetag: 20.12.1995
(51) Int. Cl.: C07F 17/00, C08F 10/00

(54) **Metallocenverbindung und ihre Verwendung als Katalysatorkomponente**

(30) Priorität: 28.12.1994 DE 4446922
(71) Anmelder: HOECHST AKTIENGESELLSCHAFT, 65929 Frankfurt am Main (DE)
(72) Erfinder: Aulbach, Michael, Dr., D-65719 Hofheim (DE); Fritze, Cornelia, Dr., D-60529 Frankfurt (DE); Herrmann, Hans-Friedrich, Dr., D-64521 Dornheim (DE); Küber, Frank, Dr., D-61440 Oberursel (DE); Spaleck, Walter, Dr., D-65835 Liederbach (DE); Zenk, Roland, Dr., D-65812 Bad Soden (DE)

(57) **Zusammenfassung**

Die vorliegende Erfindung betrifft eine mehrkernige Metallocenverbindung der Formel I 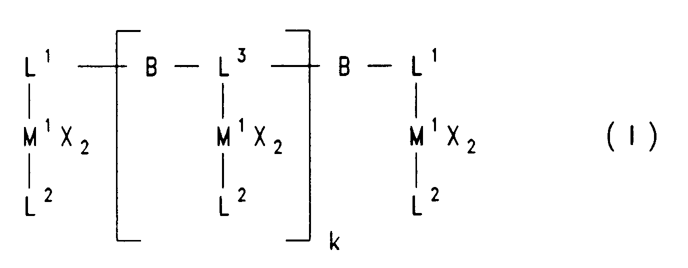
worin M¹ ein vierwertiges Metall ist, L¹ unabhängig voneinander gleich oder verschieden eine substituierte Cyclopentadienylgruppe sind, L² und L³ unabhängig voneinander gleich oder verschieden ein π-Ligand sind, B unabhängig voneinander gleich oder verschieden je eine zweiwertige verbrückende Einheit sind, X unabhängig voneinander gleich oder verschieden sind und für ein Wasserstoffatom, ein Halogenatom, einen C₁-C₁₀-Fluorkohlenstoffrest oder einen kohlenwasserstoffhaltigen Rest mit 1-40 C-Atomen stehen, und k eine ganze Zahl von 0 bis 10 ist. Die erfindungsgemäße Metallocenverbindung eignet sich als Katalysatorkomponente zur Herstellung von Olefinpolymeren.

## Beschreibung

Die vorliegende Erfindung bezieht sich auf eine neue Metallocenverbindung, die sich als Katalysatorkomponente zur Olefinpolymerisation eignet. Die Erfindung bezieht sich außerdem auf ein Verfahren zur Herstellung dieser Metallocenverbindung. Die Erfindung bezieht sich darüber hinaus auf ein Verfahren zur Herstellung von Polyolefinen unter Verwendung der erfindungsgemäßen Metallocenverbindung.

Metallocenverbindungen der 4. Nebengruppe eignen sich in Gegenwart von Methylaluminoxan (MAO) zur Polymerisation von Olefinen. In der Literatur sind Beispiele verbrückter und unverbrückter Metallocenverbindungen beschrieben, die in Kombination mit Aluminoxanen oder anderen Cokatalysatoren Katalysatorsysteme mit z. T. sehr hoher Aktivität und Stereospezifität darstellen (Chem. unserer Zeit (1994) 28, 197; J. Organomet. Chem. (1994) 479, 1). In zunehmendem Maße werden metallocenhaltige Katalysatoren für die Co- und Terpolymerisation von linearen und cyclischen Olefinen sowie Diolefinen eingesetzt (EP 399 348).

Einkernige Metallocendichloridkomplexe eignen sich in Gegenwart von MAO zur Polymerisation von Ethylen und Propylen (EP 129 368).

Bekannt sind auch zweikernige ansa-Metallocendichloridkomplexe, bei denen die Brückenatome Teil eines Kohlenwasserstoffringsystems sind und die sich in Gegenwart von MAO zur syndiospezifischen Polymerisation von 1-Olefinen eignen (EP 528 041). Auch aus EP 632 063 sind zweikernige Metallocene bekannt.

Von unverbrückten zweikernigen Metallocendichloridkomplexen mit Metallen der IV. Nebengruppe sind nur solche Beispiele bekannt, die als verbindendes Element einen zweiwertigen Kohlenwasserstoffrest oder eine Dimethylsilylgruppe enthalten (J. Chem. Soc., Chem. Comm. (1994) 727; Organometallics (1991) 10, 2191; Organometallics (1989) 8, 2107; Organometallics (1989) 8, 547; J. Organomet. Chem. (1989) 264, 105).

Ein Nachteil bei der Verwendung löslicher (homogener) Metallocen-Methylaluminoxan-Katalysatorsysteme in Verfahren, bei denen das gebildete Polymer als Feststoff anfällt, ist die Ausbildung starker Beläge an Reaktorwänden und Rührer. Diese Beläge entstehen durch Agglomeration der Polymerpartikel, wenn das Metallocen, oder Aluminoxan, oder beide gelöst im Suspensionsmedium vorliegen. Derartige Beläge in den Reaktoren müssen regelmäßig entfernt werden, da diese rasch erhebliche Stärken erreichen, eine hohe Festigkeit besitzen und den Wärmeaustausch zum Kühlmedium verhindern.

Zur Vermeidung von Reaktorbelägen können Metallocene geträgert werden. Verfahren dazu sind bekannt (EP 578 838). Allerdings kann man das Ablösen des geträgerten Katalysators von der Partikeloberfläche ("leaching") nocht nicht vollständig verhindern.

Es bestand die Aufgabe, eine Metallocenverbindung zu finden, welche die Nachteile des Standes der Technik vermeidet und insbesondere Polyolefine, wie Polyethylen mit hoher Aktivität und hoher Molmasse erzeugt. Weiterhin bestand die Aufgabe, eine Metallocenverbindung zu finden, welche durch mehrfache Fixierung auf der Trägeroberfläche ein wesentlich günstigeres "leaching"-Verhalten besitzt.

Die vorliegende Erfindung betrifft somit eine mehrkernige Metallocenverbindung der Formel I, 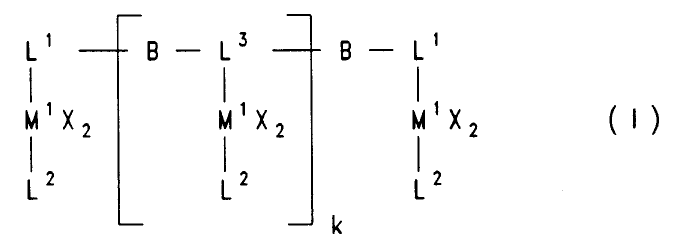
worin M¹ ein vierwertiges Metall ist, L¹ unabhängig voneinander gleich oder verschieden eine substituierte Cyclopentadienylgruppe sind, L² und L³ unabhängig voneinander gleich oder verschieden ein π-Ligand sind, B unabhängig voneinander gleich oder verschieden je eine zweiwertige verbrückende Einheit sind, X unabhängig voneinander gleich oder verschieden sind und für ein Wasserstoffatom, ein Halogenatom, einen C₁-C₁₀-Fluorkohlenstoffrest oder einen kohlenwasserstoff-haltigen Rest mit 1-40 C-Atomen stehen, und k eine ganze Zahl von 0 bis 10 ist.

Bevorzugt sind M¹ gleich Titan, Zirkonium, Hafnium, Vanadium, Niob, Tantal, Scandium, Yttrium oder ein Seltenerdmetall, besonders bevorzugt sind Titan oder Zirkonium.
L¹ sind gleich oder verschieden, bevorzugt gleich, und eine substituierte Cyclopentadienylgruppe.
L² sind gleich oder verschieden, bevorzugt gleich, und bevorzugt eine Cyclopentadienylgruppe, die vorzugsweise substituiert ist.
L³ sind gleich oder verschieden, bevorzugt gleich, und bevorzugt eine Cyclopentadienylgruppe, die vorzugsweise substituiert ist.
Unter dem Begriff Cyclopentadienylgruppe werden unsubstituierte und substituierte Cyclopentadienylgruppen verstanden, wie Methylcyclopentadienyl, Indenyl, 2-Methylindenyl, 2-Methyl-4-Pnenylindenyl, 2-Ethyl-4-Naphthylindenyl, 2-Methyl-4,6-Diisopropylindenyl, 4,5-Benzoindenyl, 2-Methyl-4,5-benzoindenyl, Fluorenyl oder 2,7-di-tert.-Butyl-fluorenyl.

Die unsubstituierten oder substituierten Cyclopentadienylgruppen können einbindig sein (L²), zweibindige substituierte Cyclopentadienylidengruppen (L¹) bedeuten, oder auch dreibindige unsubstituierte oder substituierte Cyclopentadienyl-ylidengruppen (L³) bedeuten.
X sind bevorzugt gleich und stehen für ein Wasserstoffatom, ein Halogenatom, einen C₁-C₁₀-Fluorkohlenstoffrest wie CF₃, oder einen kohlenwasserstoffhaltigen Rest mit 1-40 C-Atomen wie C₁-C₂₀-Alkyl, C₆-C₃₀-Aryl, ein Rest OR¹ oder NR¹₂, worin R¹ gleich oder verschieden sind, und Wasserstoff, einen C₁-C₃₀-kohlenwasserstoffhaltigen Rest wie C₁-C₂₀-Alkyl, C₆-C₃₀-Aryl oder einen C₁-C₂₀-Halogenkohlenwasserstoffrest bedeuten.

B ist eine zweiwertige C₁-C₄₀-kohlenwasserstoffhaltige verbrückte Einheit und besitzt bevorzugt die Formel II

-E(R²)ₙ-Kₘ-E(R²)ₙ- (II)

wobei ist E gleich oder verschieden sind und für ein Heteroatom (d.h. ein Atom ungleich Kohlenstoff und Wasserstoff) steht, bevorzugt steht E für ein Element der vierten Hauptgruppe des Periodensystems der Elemente außer Kohlenstoff, oder für ein Element der fünften oder sechsten Hauptgruppe des Periodensystems der Elemente, besonders bevorzugt für Silizium und Germanium.

R² steht für einen kohlenwasserstoffhaltigen Rest mit ein bis vierzig Kohlenstoffatomen wie z.B. C₁-C₂₀-Alkyl oder C₆-C₃₀-Aryl. Die Reste R² können auch cyclisch miteinander verbunden sein. n entspricht der Wertigkeit von E minus 2, z.B. ist n gleich 2, falls E ein Element der vierten Hauptgruppe ist, n ist vorzugsweise eins, falls E ein Element der fünften Hauptgruppe darstellt, und n ist null, falls E ein Element der sechsten Hauptgruppe darstellt. K stellt eine verbrückende Einheit zwischen den beiden Heteroatomen E dar und ist bevorzugt ein kohlenwasserstoffhaltiger zweiwertiger Rest mit eins bis vierzig Kohlenstoffatomen, bevorzugt 2 Kohlenstoffatomen. m ist eins oder - falls die beiden Elemente E direkt miteinander verbunden sind - null.
k ist eine ganze Zahl von 0 bis 10, vorzugsweise 0, 1 oder 2.

Beispiele für L¹ sind:
Methylcyclopentadienyliden, tert-Butylcyclopentadienyliden, Dimethylcyclopentadienyliden, 1H-Inden-1-yliden, 4-Phenyl-1H-inden-1-yliden, 4-Naphthyl-1H-inden-1-yliden, 2,4,7-Trimethyl-1H-inden-1-yliden, 2-Methyl-1H-inden-1-yliden, 2-Methyl-4,6-diisopropyl-1H-inden-1-yliden, 2-Methyl-4-phenyl-1H-inden-1-yliden, 2-Methyl-4,5-benzo-1H-inden-1-yliden, 4,5-Benzo-1H-inden-1-yliden, 9H-Fluoren-9-yliden, 2,7-Dibrom-9H-fluoren-9-yliden, 4,5-Dimethyl-9H-fluoren-9-yliden, 3-tert-Butyl-9H-fluoren-9-yliden, 7H-Benzo[c]fluoren-7-yliden.

Beispiele für L² sind:
Cyclopentadienyl, Methylcyclopentadienyl, Dimethylcyclopentadienyl, tert-Butylcyclopentadienyl, Pentamethylcyclopentadienyl, Pentaethylcyclopentadienyl, Pentaphenylcyclopentadienyl, Indenyl, 1,2,3-Trimethylindenyl, 9H-Fluorenyl, 2,7-Diphenyl-9H-fluorenyl, 9-Trimethylsilyl-9H-fluorenyl, 4,5-Dimethyl-9H-fluorenyl und 3-tert-Butyl-9H-fluorenyl.

Beispiele für L³ sind:
Cyclopentadien-1-yl-2,4-yliden, 9H-fluoren-9-yl-2,7-yliden, 1H-Inden-1-yl-4,7-yliden, 1H-Inden-1-yl-3,7-yliden.

Beispiele für mehrkernige Metallocenverbindungen der Formel I sind:
[1,1,2,2-Tetramethyl-1,2-bis-(1H-indenyl-1-yliden)disilan]bis(cyclopentadienyltitandichlorid)
[1,4-Disila-1,4-bis-(1H-indenyl-1-yliden)-1,1,4,4-tetramethylbutan]bis(cyclopentadienyltitandichlorid)
[1,5-Disila-1,5-bis-(1H-indenyl-1-yliden)-1,1,5,5-tetramethylpentan]bis(cyclopentadienyltitandichlorid)
[1,6-Disila-1,6-bis-(1H-indenyl-1-yliden)-1,1,6,6-tetramethylhexan]bis(cyclopentadienyltitandichlorid)
[1,8-Disila-1,8-bis-(1H-indenyl-1-yliden)-1,1,8,8-tetramethyloctan]bis(cyclopentadienyltitandichlorid)
[1,10-Disila-1,10-bis-(1H-indenyl-1-yliden)-1,1,10,10-tetramethyldecan]bis(cyclopentadienylzirkoniumdichlorid)
[1,12-Disila-1,12-bis-(1H-indenyl-1-yliden)-1,1,12,12-tetramethyldodecan]bis(cyclopentadienylzirkoniumdichlorid)
[1,4-Disila-1,4-bis-(1H-indenyl-1-yliden)-1,1,4,4-tetramethyl-2-butin]bis(cyclopentadienylzirkoniumdichlorid)
1,4-Bis[dimethyl-(1H-indenyl-1-yliden)silyl]benzol-bis(cylcopentadienylzirkoniumdichlorid)
1,4-Bis[2-[dimethyl-(1H-indenyl-1-yliden)silyl]ethyl]-bis(cyclopentadienylzirkoniumdichlorid)
[1,1,2,2-Tetramethyl-1,2-bis-(9H-fluorenyl-9-yliden)disilan]bis(cyclopentadienylzirkoniumdichlorid)
[1,4-Disila-1,4-bis-(9H-fluorenyl-9-yliden)-1,1,4,4-tetramethylbutan]bis(cyclopentadienylzirkoniumdichlorid)
[1,5-Disila-1,5-bis-(9H-fluorenyl-9-yliden)-1,1,5,5-tetramethylpentan]bis(cyclopentadienylzirkoniumdichlorid)
[1,6-Disila-1,6-bis-(9H-fluorenyl-9-yliden)-1,1,6,6-tetramethylhexan]bis(cyclopentadienylzirkoniumdichlorid)
[1,8-Disila-1,8-bis-(9H-fluorenyl-9-yliden)-1,1,8,8-tetramethyloctan]bis(cyclopentadienylzirkoniumdichlorid)
[1,10-Disila-1,10-bis-(9H-fluorenyl-9-yliden)-1,1,10,10-tetramethyldecan]bis(cyclopentadienylhafniumdichlorid)
[1,12-Disila-1,12-bis-(9H-fluorenyl-9-yliden)-1,1,12,12-tetramethyldodecan]bis-(cyclopentadienylhafniumdichlorid)
[1,4-Disila-1,4-bis-(9H-fluorenyl-9-yliden)-1,1,4,4-tetramethyl-2-butin]bis(cyclopentadienylhafniumdichlorid)
1,4-Bis[dimethyl-(9H-fluorenyl-9-yliden)silyl]benzol-bis(cyclopentadienylhafniumdichlorid)
1,4-Bis[2-[dimethyl-(9H-fluorenyl-9-yliden)silyl]ethyi]-bis(cyclopentadienylhafniumdichlorid)
[1,1,2,2-Tetramethyl-1,2-bis-(1H-indenyl-1-yliden)disilan]bis(pentamethylcyclopentadienyltitandichlorid)
[1,4-Disila-1,4-bis-(1H-indenyl-1-yliden)-1,1,4,4-tetramethylbutan]bis(pentamethylcyclopentadienyltitandichlorid)
[1,5-Disila-1,5-bis-(1H-indenyl-1-yliden)-1,1,5,5-tetramethylpentan]bis(pentamethylcyclopentadienyltitandichlorid)
[1,6-Disila-1,6-bis-(1H-indenyl-1-yliden)-1,1,6,6-tetramethylhexan]bis(pentamethylcyclopentadienylzirkoniumdichlorid)
[1,8-Disila-1,8-bis-(1H-indenyl-1-yliden)-1,1,8,8-tetramethvloctan]bis(pentamethylcyclopentadienylzirkoniumdichlorid)
[1,10-Disila-1,10-bis-(1H-indenyl-1-yliden)-1,1,10,10-tetramethyldecan]bis(pentamethylcyclopentadienylzirkoniumdichlorid)
[1,12-Disila-1,12-bis-(1H-indenyl-1-yliden)-1,1,12,12-tetramethyldodecan]bis(pentamethylcyclopentadienylzirkoniumdichlorid)
[1,4-Disila-1,4-bis-(1H-indenyl-1-yliden)-1,1,4,4-tetramethyl-2-butin]bis(pentamethylcyclopentadienylhafniumdichlorid)
1,4-Bis[dimethyl-(1H-indenyl-1-yliden)silyl]benzol-bis(pentamethylcyclopentadienylhafniumdichlorid)
1,4-Bis[2-[dimethyl-(1H-indenyl-1-yliden)silyl]ethyl]-bis(pentamethylcyclopentadienylhafniumdichlorid)
[1,1,2,2-Tetramethyl-1,2-bis-(9H-fluorenyl-9-yliden)disilan]bis(pentamethylcyclopentadienylzirkoniumdichlorid)
[1,4-Disila-1,4-bis-(9H-fluorenyl-9-yliden)-1,1,4,4-tetramethylbutan]bis(pentamethylcyclopentadienylzirkoniumdichlorid)
[1,5-Disila-1,5-bis-(9H-fluorenyl-9-yliden)-1,1,5,5-tetramethylpentan]bis(pentamethylcyclopentadienylhafniumdichlorid)
[1,6-Disila-1,6-bis-(9H-fluorenyl-9-yliden)-1,1,6,6-tetramethylhexan]bis(pentamethylcyclopentadienylhafniumdichlorid)
[1,8-Disila-1,8-bis-(9H-fluorenyl-9-yliden)-1,1,8,8-tetramethyloctan]bis(pentamethylcyclopentadienylhafniumdichlorid)
[1,10-Disila-1,10-bis-(9H-fluorenyl-9-yliden)-1,1,10,10-tetramethyldecan]bispentamethylcyclopentadienyltitandichlorid)
[1,12-Disila-1,12-bis-(9H-fluorenyl-9-yliden)-1,1,12,12-tetramethyldodecan]bis(pentamethylcyclopentadienyltitandichlorid)
[1,4-Disila-1,4-bis-(9H-fluorenyl-9-yliden)-1,1,4,4-tetramethyl-2-butin]bis(pentamethylcyclopentadienyltitandichlorid)
1,4-Bis[dimethyl-(9H-fluorenyl-9-yliden)silyl]benzol-bis(pentamethylcyclopentadienylzirkoniumdichlorid)
1,4-Bis[2-[dimethyl-(9H-fluorenyl-9-yliden)silyl]ethyl]-bis(pentamethylcyclopentadienylzirkoniumdichlorid)
[1,4-Disila-1,4-bis-(3-tert-butyl-2,4-cyclopentadien-1-yliden)-1,1,4,4-tetramethylbutan]bis(indenyltitandimethyl)
[1,5-Disila-1,5-bis-(1H-indenyl-1-yliden)-1,1,5,5-tetramethylpentan]bis(indenyltitandimethyl)
[1,6-Disila-1,6-bis-(4,7-dimethyl-1-indenyl-1-yliden)-1,1,6,6-tetramethylhexan]bis(indenylzirkoniumdimethyl)
[1,8-Disila-1,8-bis-(2-ethyl-4-phenyl-1H-indenyl-1-yliden)-1,1,8,8-tetramethyloctan]bis(indenylzirkoniumdichlorid)
[1,10-Disila-1,10-bis-(2,7-dimethyl-9H-fluoren-9-yliden)-1,1,10,10-tetramethyldecan]bis(cyclopentadienylzirkoniumdichlorid)
[1,12-Disila-1,12-bis-(2,4-dimethyl-2,4-cyclopentadien-1-yliden)-1,1,12,12-tetramethyldodecan]bis(cyclopentadienylzirkoniumdichlorid)
[1,4-Disila-1,4-bis-(4,5-dimethyl-9H-fluoren-9-yliden)-1,1,4,4-tetramethyl-2-butin]bis(pentamethylcyclopentadienylzirkoniumdimethyl)
1,4-Bis[dimethyl-(2,7-di-tert-butyl-9H-fluorenyl-9-yliden)silyl]benzol-bis(cylcopentadienylzirkoniumdichlorid)
1,4-Bis[2-[dimethyl-(4-naphthyl-1H-indenyl-1-yliden)silyl]ethyl]-bis(cyclopentadienylhafniumdimethyl]
[1,8-Disila-1,8-bis(2-methyl-1H-indenyl-1-yliden)-1,1,8,8-tetraethyloctan)]bis[(2-methyl-4-phenyl-1H-indenyl)zirconiumdichlorid]
[1,6-Disila-1,6-bis(4,5-benzo-1H-indenyl-1-yliden)-1,1,6,6-tetraethoxyoctan)]bis[(2-methyl-4-naphthyl-1H-indenyl)zirconiumdichlorid]
[1,8-Disila-1,8-bis(2,3-dimethyl-1H-indenyl-1-yliden)-1,1,8,8-tetraethyl-3,4-dibutyl-3-octen)]bis[(2-methyl-4,7-diisopropyl-1H-indenyl)zirconiumdichlorid]
[1,7-Distanna-4-oxa-1,7-bis(tetramethylcyclopenta-2,4-dienyl-1-yliden)-1,1-dimethyl-7,7-dibutylheptan]bis[(2,7-dimethyl-9H-fluorenyl)zirkoniumdichlorid]
[1,8-Disila-1,8-bis(3-methylcyclopenta-2,4-dien-1-yliden)-1,1,8,8-tetramethyloctan)]bis[(4-phenyl-1H-indenyl)zirconiumdichlorid]
Die Verfahren zur Herstellung der Ligandsysteme der erfindungsgemäßen Metallocenverbindung sind im Prinzip bekannt (Angew. Chem. (1989) 101, 1536).

Die vorliegende Erfindung betrifft weiterhin ein Verfahren zur Herstellung einer Metallocenverbindung der Formel I. Hierbei wird eine Ligandenvorstufe der Formel III durch ein geeignetes Reagenz der Formel IV M²R³ (k + 2)fach deprotoniert und mit einer Verbindung der Formel V umgesetzt zu einer Verbindung der Formel VI. 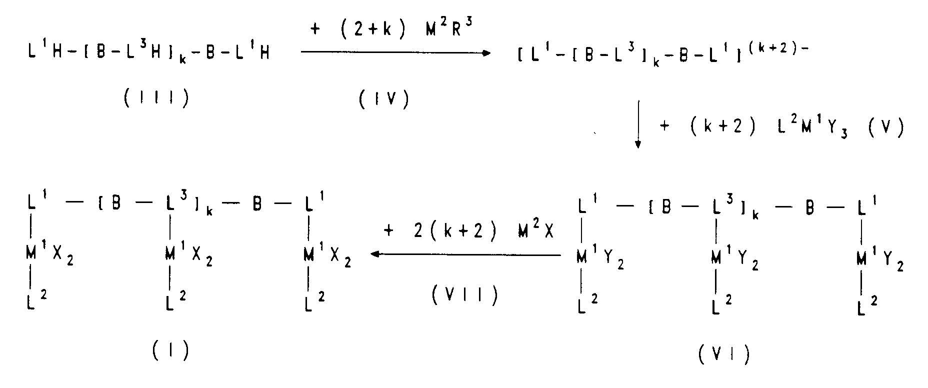
L¹, B und k haben in Formel III die gleiche Bedeutung wie in Formel I. In Formel IV steht M² für ein Alkalimetall wie Lithium, Natrium oder Kalium und R³ steht für einen kohlenwasserstoffhaltigen Rest mit 1 bis 16 Kohlenstoffatomen oder Wasserstoff. Verfahren zur Herstellung von Verbindungen der Formel L²M¹Y₃ (V) sind bekannt (Chem. Ber. (1994) 127, 3; Macromolecules (1993) 26, 5822; J. Organomet. Chem. (1988) 340, 37; Inorg. Chem. (1982) 21, 1277). In Formel V steht Y für ein Halogenatom, insbesondere für Chlor, L² und M¹ haben die gleiche Bedeutung wie in Formel I. In Formel VII ist M² ein Alkalimetall wie Lithium, Natrium oder Kalium und X hat die gleiche Bedeutung wie in Formel I.

Die Reaktion wird bevorzugt in einem aprotischen Lösungsmittel, z.B. Toluol, Hexan, Diethylether oder Tetrahydrofuran durchgeführt. Die Temperatur kann zwischen -78 und 140°C betragen, bevorzugt 0 bis 110°C. Die Verbindung VI kann im Überschuß eingesetzt werden, bevorzugt werden 2 bis 3 Äquivalente der Verbindung VI bezogen auf die Ligandenvorstufe III verwendet.

Die vorliegende Erfindung betrifft außerdem ein Verfahren zur Herstellung eines Olefinpolymers durch Polymerisation mindestens eines Olefins in Gegenwart eines Katalysators, welcher mindestens eine Metallocenverbindung und mindestens einen Cokatalysator enthält, dadurch gekennzeichnet, daß das Metallocen eine Verbindung der Formel I ist.

Bevorzugt werden Olefine der Formel R^{a}-CH = CH-R^{b} homo- oder copolymerisiert, worin R^{a} und R^{b} gleich oder verschieden sind und ein Wasserstoffatom oder einen Kohlenwasserstoffrest mit 1 bis 20 Kohlenstoffatomen, insbesondere 1 bis 10 Kohlenstoffatome, bedeuten, oder R^{a} und R^{b} zusammen mit den sie verbindenden Atomen einen oder mehrere Ringe bilden. Beispiele für solche Olefine sind 1-Olefine wie Ethylen, Propylen, 1-Buten, 1-Penten, 1-Hexen, 4-Methyl-1-penten oder 1-Octen, Styrol, Diene wie 1,3-Butadien oder 1,4-Hexadien und cyclische Olefine wie Norbornen, Tetracyclododecen, Norbornadien oder Vinylnorbornen. Bevorzugt wird in dem erfindungsgemäßen Verfahren Ethylen homopolymerisiert, oder Ethylen mit einem oder mehrereren 1-Olefinen mit 3 bis 20 Kohlenstoffatomen, wie Propylen, und/oder einem oder mehreren Dienen mit 4 bis 20 Kohlenstoffatomen, wie 1,4-Butadien, copoly- merisiert. Beispiele solcher Copolymere sind Ethylen/Propylen-Copolymere und Ethylen/Propylen/1,4-Hexadien-Copolymere.

Die Polymerisation wird bevorzugt bei einer Temperatur von -60 bis 300°C, besonders bevorzugt 50 bis 200°C, durchgeführt. Der Druck beträgt bevorzugt 0,5 bis 64 bar.

Die Polymerisation kann in Lösung, in Masse, in Suspension oder in der Gasphase, kontinuierlich oder diskontinuierlich, ein- oder mehrstufig durchgeführt werden. Eine bevorzugte Ausführungsform ist die Gasphasenpolymerisation.

Bevorzugt enthält der in dem erfindungsgemäßgen Verfahren eingesetzte Katalysator eine Metallocenverbindung der Formel I. Es können auch Mischungen zweier oder mehrerer Metallocenverbindungen der Formel I, oder Mischungen von Metallocenverbindungen der Formel I mit anderen verbrückten oder unverbrückten Metallocenen eingesetzt werden, z.B. zur Herstellung von Polyolefinen mit breiter oder multimodaler Molmassenverteilung.

Prinzipiell ist als Cokatalysator in dem erfindungsgemäßen Verfahren jede Verbindung geeignet, die aufgrund ihrer Lewis-Acidität das neutrale Metallocen in ein Kation überführen und dieses stabilisieren kann ("labile Koordination"). Darüber hinaus soll der Cokatalysator oder das aus ihm gebildete Anion keine weiteren Reaktionen mit dem gebildeten Metallocenkation eingehen (EP 427 697). Als Cokatalysator wird bevorzugt eine Aluminiumverbindung und/oder eine Borverbindung verwendet.

Die Borverbindung hat bevorzugt die Formel R³ₓNH₄₋ₓBR⁴₄, R³ₓPH₄₋ₓBR⁴₄, R³₃CBR⁴₄ oder BR⁴₃, worin x eine Zahl von 1 bis 4, bevorzugt 3, bedeutet, die Reste R³ gleich oder verschieden, bevorzugt gleich sind, und C₁-C₁₀-Alkyl- oder C₆-C₁₈- Arylreste sind, oder zwei Reste R³ zusammen mit den sie verbindenden Atomen einen Ring bilden, und die Reste R⁴ gleich oder verschieden, bevorzugt gleich sind, und C₆-C₁₈-Aryl sind, das durch Alkyl, Haloalkyl oder Fluor substituiert sein kann. Insbesondere steht R³ für Ethyl, Propyl, Butyl oder Phenyl und R⁴ für Phenyl, Pentafluorophenyl, 3,5-Bistrifluoromethylphenyl, Mesityl, Xylyl oder Tolyl (EP 277 003, EP 277 004 und EP 426 638).

Bevorzugt wird als Cokatalysator eine Aluminiumverbindung wie Aluminoxan und/oder ein Aluminiumalkyl eingesetzt.

Besonders bevorzugt wird als Cokatalysator ein Aluminoxan, insbesondere der Formel VIIIa für den linearen Typ und/oder der Formel VIIIb für den cyclischen Typ verwendet, 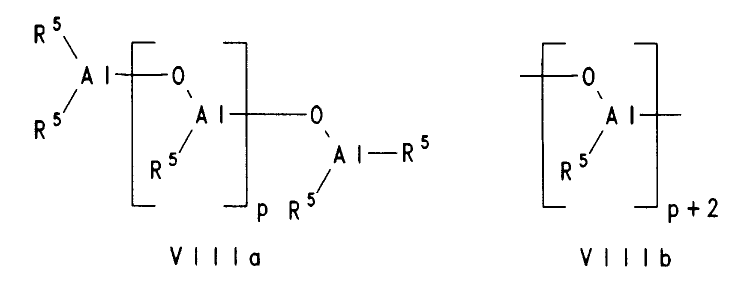
wobei in den Formeln VIIIa und VIIIb die Reste R⁵ gleich oder verschieden sind und Wasserstoff oder eine C₁-C₁₈-Alkylgruppe oder eine C₆-C₁₈-Arylgruppe oder Benzyl bedeuten, und p eine ganze Zahl von 2 bis 50, bevorzugt 10 bis 35 bedeutet.

Bevorzugt sind die Reste R⁵ gleich und bedeuten Wasserstoff, Methyl, Isobutyl, Phenyl oder Benzyl, besonders bevorzugt Methyl.

Die Verfahren zur Herstellung der Aluminoxane sind bekannt (DE 4 004 477).

Die genaue räumliche Struktur der Aluminoxane ist nicht bekannt (J. Am. Chem. Soc, 115 (1993) 4971). Beispielsweise ist denkbar, daß sich Ketten und Ringe zu größeren zwei- oder dreidimensionalen Strukturen verbinden.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die erfindungsgemäße Metallocenverbindung vor dem Einsatz in der Polymerisation mit einem Cokatalysator, insbesondere einem Aluminoxan vorzuaktivieren. Dadurch wird die Polymerisationsaktivität deutlich erhöht. Die Voraktivierung der Metallocenverbindung wird vorzugsweise in Lösung vorgenommen. Bevorzugt wird dabei die Metallocenverbindung in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösungsmenge. Das Metallocen kann in der gleichen Konzentration eingesetzt werden, vorzugsweise wird es jedoch in einer Menge von 10⁻⁴ bis 1 mol pro mol Aluminium eingesetzt. Die Voraktivierungsdauer beträgt 5 Minuten bis 60 Stunden, vorzugsweise 5 bis 60 Minuten. Man arbeitet bei einer Temperatur von -78 bis 100°C, vorzugsweise von 0 bis 70°C.

Dabei wird die Metallocenverbindung bevorzugt in einer Konzentration, bezogen auf das Übergangsmetall, von 10⁻³ bis 10⁻⁸, vorzugsweise 10⁻⁴ bis 10⁻⁷ mol Über- gangsmetall pro dm³ Lösungsmittel bzw. pro dm³ Reaktorvolumen angewendet. Das Aluminoxan wird bevorzugt in einer Konzentration von 10⁻⁶ bis 10⁻¹ mol, vorzugsweise 10⁻⁵ bis 10⁻² mol pro dm³ Lösungsmittel bzw. pro dm³ Reaktorvolumen verwendet. Die anderen genannten Cokatalysatoren werden in etwa äquimolaren Mengen zu der Metallocenverbindung verwendet. Prinzipiell sind aber auch höhere Konzentrationen möglich.

Zur Entfernung von im Olefin vorhandenen Katalysatorgiften ist eine Reinigung mit einer Aluminiumverbindung, bevorzugt einem Aluminiumalkyl, wie Trimethylaluminium oder Triethylaluminium, vorteilhaft. Diese Reinigung kann sowohl im Polymerisationssystem selbst erfolgen, oder das Olefin wird vor der Zugabe in das Polymerisationssystem mit der Aluminiumverbindung in Kontakt gebracht und anschließend wieder abgetrennt.

Als Molmassenregler und/oder zur Steigerung der Aktivität kann in dem erfindungsgemäßen Verfahren Wasserstoff zugegeben werden. Hierdurch können niedermolekulare Polyolefine wie Wachse erhalten werden.

Bevorzugt wird in dem erfindungsgemäßen Verfahren die Metallocenverbindung mit dem Cokatalysator außerhalb des Polymerisationsreaktors in einem separaten Schritt unter Verwendung eines geeigneten Lösungsmittels umgesetzt. Dabei kann eine Trägerung vorgenommen werden.

In dem erfindungsgemäßen Verfahren kann mit Hilfe der Metallocenverbindung eine Vorpolymerisation erfolgen. Zur Vorpolymerisation wird bevorzugt das (oder eines der) in der Polymerisation eingesetzte(n) Olefin(e) verwendet.

Der in dem erfindungsgemäßen Verfahren eingesetzte Katalysator kann geträgert sein. Durch die Trägerung läßt sich beispielsweise die Kornmorphologie des hergestellten Polyolefins steuern. Dabei kann die Metallocenverbindung zunächst mit dem Träger und anschließend mit dem Cokatalysator umgesetzt werden. Es kann auch zunächst der Cokatalysator geträgert werden und anschließend mit der Metallocenverbindung umgesetzt werden. Auch ist es möglich, das Reaktionsprodukt von Metallocenverbindung und Cokatalysator zu trägern. Geeignete Trägermaterialien sind beispielsweise Silikagele, Aluminiumoxide, festes Aluminoxan oder andere anorganische Trägermaterialien wie beispielsweise Magnesiumchlorid. Ein geeignetes Trägermaterial ist auch ein Polyolefinpulver in feinverteilter Form. Die Herstellung des geträgerten Cokatalysators kann beispielsweise wie in EP 567 952 beschrieben durchgeführt werden.

Wenn die Polymerisation als Suspensions- oder Lösungspolymerisation durchgeführt wird, wird ein für das Ziegler-Niederdruckverfahren gebräuchliches inertes Lösungsmittel verwendet. Beispielsweise arbeitet man in einem aliphatischen oder cycloaliphatischen Kohlenwasserstoff; als solcher sei beispielsweise Propan, Butan, Hexan, Heptan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösungsmittel verwendet, werden die Monomeren gasförmig oder flüssig zudosiert.

Die Dauer der Polymerisation ist beliebig, da das in dem erfindungsgemäßen Verfahren zu verwendende Katalysatorsystem einen nur geringen zeitabhängigen Abfall der Polymerisationsaktivität zeigt.

Die nach dem erfindungsgemäßen Verfahren hergestellten Polymere sind insbesondere zur Herstellung von Formkörpern wie Folien, Platten oder Großhohlkörpern (z.B. Rohre) geeignet.

Die erfindungsgemäße Metallocenverbindung kann vorteilhaft zur Herstellung von Copolymeren, insbesondere ethylenhaltigen Copolymeren, mit niedriger Dichte wie LLDPE eingesetzt werden. Insbesondere eignet sich die erfindungsgemäße Metallocenverbindung zur Herstellung von Copolymeren, insbesondere ethylenhaltigen Copolymeren, mit niedriger Dichte unter Verwendung niedriger Comonomer-Konzentrationen. Dies ist insbesondere dann von Vorteil, wenn aus technischen oder ökonomischen Erwägungen eine niedrige Comonomerkonzentration einzuhalten ist, z.B. wenn in der Gasphasenpolymerisation Comonomere bei Überschreiten der Sättigungskonzentration kondensieren und technische Schwierigkeiten verursachen. Insbesondere vorteilhaft ist die Verwendung der erfindungsgemäßen Metallocenverbindung bei der Copolymerisation mit höhersiedenden Comonomeren in der Gasphasenpolymerisation.

### Beispiele:

Herstellung und Handhabung organometallischer Verbindungen erfolgten unter Ausschluß von Luft und Feuchtigkeit unter Argon-Schutzgas (Schlenk-Technik). Alle benötigten Lösungsmittel wurden vor Gebrauch durch mehrstündiges Sieden über geeigneten Trockenmitteln und anschließende Destillation unter Argon absolutiert.

Die Verbindungen wurden mit ¹H-NMR-Spektroskopie charakterisiert.

### Beispiel 1

### [1,4-Disila-1,4-bis-(9H-fluorenyl-9-yliden)-1,1,4,4-tetramethylbutan]bis(cyclopentadienylzirkoniumdichlorid) (1):

5.0 g (10.5 mmol) 1,1,4,4-Tetramethyl-1,4-difluorenyl-1,4-disilabutan werden in 100 ml Diethylether suspendiert und mit 13.0 ml (21 mmol) n-Butyllithium (1.6 molar in Hexan) umgesetzt. Die gelbe Suspension wird 8 Stunden bei Raumtemperatur gerührt und anschließend auf 0°C abgekühlt. Dann werden 5.5 g (21 mmol) Cyclopentadienylzirkoniumtrichlorid zugegeben, 30 Minuten bei 0°C und eine Stunde bei Raumtemperatur gerührt. Die orange Suspension wird unter Vakuum vom Lösungsmittel befreit, der Rückstand mit Methylenchlorid extrahiert und über eine Glasfritte filtriert. Bei -30°C kristallisieren insgesamt 4.25 g (4.6 mmol, 44 %) des Zweikernkomplexes 1 in Form gelber Kristalle aus.
¹H-NMR (300 MHz, CDCl₃, 25°C, δ (ppm) rel. CH₂Cl₂):
8.14-8.08 (m, 4 H, C₁₃H₈), 7.77-7.68 (m, 4 H, C₁₃H₈), 7.47-7.40 (m, 8 H, C₁₃H₈), 5.73 (s, 10 H, C₅H₅), 0.77 (s, 4 H, CH₂CH₂), 0.59 (s, 12 H, Si(CH₃)₂).

### Beispiel 2

### [1,4-Disila-1,4-bis-(1H-indenyl-1-yliden)-1,1,4,4-tetramethylbutan]bis(cyclopenta - dienylzirkoniumdichlorid) (2):

4.0 g (10.7 mmol) 1,1,4,4-Tetramethyl-1,4-diindenyl-1,4-disilabutan werden in 80 ml Diethylether gelöst und mit 13.5 ml (21.4 mmol) n-Butyllithium (1.6 molar in Hexan) umgesetzt. Die gelbe Lösung wird 4 Stunden bei Raumtemperatur gerührt und anschließend mit 5.65 g (21.6 mmol) Cyclopentadienylzirkoniumtrichlorid versetzt. Es bildet sich innerhalb von Minuten eine rote, zunächst ölige Suspension, die sich innerhalb von 3 Stunden in eine gelbe Suspension verwandelt. Das Lösungsmittel wird über eine Glasfritte abgetrennt, der Rückstand mit 50 ml Diethylether gewaschen und im Vakuum getrocknet. Der Rückstand wird mit Methylenchlorid extrahiert, über eine Glasfritte filtriert und bei -30°C zur Kristallisation gebracht. Die Ausbeute an feinkristallinem 2 liegt bei 2.8 g (3.4 mmol, 32 %).
¹H-NMR (300 MHz, CDCl₃, 25°C, δ (ppm) rel. CH₂Cl₂):
7.76-7.66 (m, 4 H, C₉H₆), 7.38-7.26 (m, 4 H, C₉H₆), 6.98 (d, 2 H, C₉H₆), 6.84 (d, 2 H, C₉H₆), 6.05 (s, 10 H, C₅H₅), 0.72 (m, 4 H, CH₂CH₂), 0.46 (s, 6 H, SiCH₃), 0.40 (s, 6 H, SiCH₃).

### Beispiel 3

### [1,4-Disila-1,4-bis-(1H-indenyl-1-yliden)-1,1,4,4-tetramethylbutan]bis(pentamethylcyclo-pentadienylzirkoniumdichlorid) (3):

6.0 g (16.0 mmol) 1,1,4,4-Tetramethyl-1,4-diindenyl-1,4-disilabutan werden in 250 ml Diethylether gelöst und mit 20.0 ml (31.0 mmol) n-Butyllithium (1.6 molar in Hexan) umgesetzt. Die hellgelbe Lösung wird 8 h bei Raumtemperatur gerührt und anschließend mit 10.3 g (31.0 mmol) Pentamethylcyclopentadienylzirkoniumtrichlorid versetzt. Es bildet sich innerhalb von Minuten eine gelbe Suspension, die noch drei Stunden bei Raumtemperatur nachgerührt wird. Das Lithiumchlorid wird über eine Glasfritte abgetrennt und der Rückstand mit 200 ml Diethylether gewaschen. Die vereinigten etherischen Lösungen werden auf 150 ml eingeengt und bei -20 °C zur Kristallisation gebracht. Die Ausbeute an 3 liegt bei 4.5 g (4.7 mmol, 29 %).
¹H-NMR (300 MHz, CDCl₃, 25°C, δ (ppm) rel. CHCl₃):
7.92 (m, 2 H, C₉H₆), 7.65 (m, 2 H, C₉H₆), 7.44 (m, 4 H, C₉H₆), 6.46 (s, 4 H, C₉H₆), 2.18 (s, 30 H, C₅Me₅), 0.82 (m, 4 H, CH₂CH₂), 0.58 (s, 6 H, SiCH₃), 0.52 (s, 6 H, SiCH₃).

### Polymerisationbeispiel 1

0,20 mg des Metallocens aus Beispiel 1 wurden in 1,25 ml MAO-Lösung in Toluol gelöst und 15 Minuten gerührt. Parallel hierzu wird ein inertisierter 1,5 dm³ Rührreaktor mit 750 ml Dieselöl (Siedepunkt 100 bis 120°C) sowie 3,75 ml MAO-Lösung in Toluol befüllt und auf 70°C temperiert. Die Katalysator-Lösung wird zudosiert und bei 750 Upm mit 7 bar Ethylen 1 Stunde polymerisiert. Anschließend wird der Reaktor entspannt, das Polymere aus der Suspension abfiltriert, mit Aceton gewaschen und 12 Stunden im Vakuum-Trockenschrank getrocknet. Es resultieren 14 g Polyethylen, mit einer VZ von 711 ml/g.

### Polymerisationsbeispiel 2

Mit 0,6 mg des Metallocens aus Beispiel 2 wurde wie im Polymerisationsbeispiel 1 polymerisiert.
Es resultieren 29,4 g Polyethylen, mit einer VZ von 874 ml/g. Die GPC-Analyse findet Mw = 551000 g/mol und Mw/Mn = 5,2.

### Polymerisationsbeispiel 3

Mit 0,5 mg des Metallocens aus Beispiel 2 wurde analog zu Polymerisationsbeispiel 2 polymerisiert, wobei zunächst 0,5 bar Wasserstoff vorgelegt und dann mit Ethylen auf 7 bar ergänzt wurde. Es resultieren 42,3 g Polyethylen, mit einer VZ von 113 ml/g.

### Polymerisationsbeispiel 4

Mit 2,0 mg des Metallocens aus Beispiel 3 wurde wie im Polymerisationsbeispiel 1 polymerisiert.
Es resultieren 25 g Polyethylen, mit einer VZ von 224 ml/g. Die GPC-Analyse findet Mw = 121400 g/mol und Mw/Mn = 7,1.

## Patentansprüche

1. Mehrkernige Metallocenverbindung der Formel I 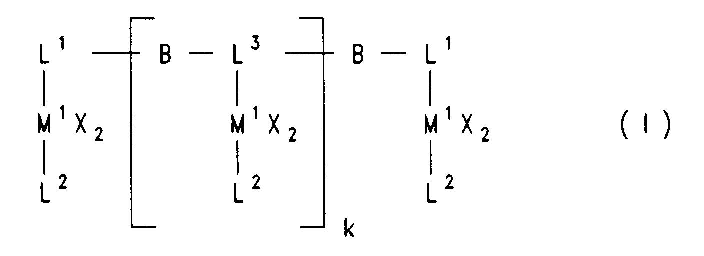 worin M¹ ein vierwertiges Metall ist, L¹ unabhängig voneinander gleich oder verschieden eine substituierte Cyclopentadienylgruppe sind, L² und L³ unabhängig voneinander gleich oder verschieden ein π-Ligand sind, B unabhängig voneinander gleich oder verschieden je eine zweiwertige verbrückende Einheit sind, X unabhängig voneinander gleich oder verschieden sind und für ein Wasserstoffatom, ein Halogenatom, einen C₁-C₁₀-Fluorkohlenstoffrest oder einen kohlenwasserstoffhaltigen Rest mit 1-40 C-Atomen stehen, und k eine ganze Zahl von 0 bis 10 ist.

2. Metallocenverbindung gemäß Anspruch 1, worin M¹ Titan, Zirkonium oder Hafnium ist, L² und L³ unabhängig voneinander gleich oder verschieden eine Cyclopentadienylgruppe sind, B unabhängig voneinander gleich oder verschieden je eine zweiwertige verbrückende Einheit sind, und k eine ganze Zahl von 0 bis 2 ist.

3. Katalysatorkomponente, enthaltend a) mindestens eine mehrkernige Metallocenverbindung der Formel I gemäß Anspruch 1 oder 2 und b) mindestens einen Cokatalysator.

4. Katalysatorkomponente gemäß Anspruch 3 in geträgerter und/oder vorpolymerisierter Form.

5. Verfahren zur Herstellung eines Olefinpolymers durch Polymerisation mindestens eines Olefins in Gegenwart eines Katalysators, welcher mindestens eine mehrkernige Metallocenverbindung und mindestens einen Cokatalysator enthält, dadurch gekennzeichnet, daß die mehrkernige Metallocenverbindung die Formel I aufweist, 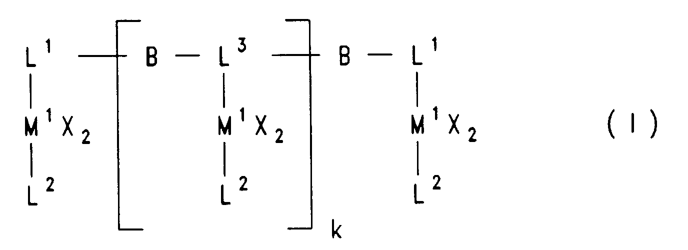 worin M¹ ein vierwertiges Metall ist, L¹ unabhängig voneinander gleich oder verschieden eine substituierte Cyclopentadienylgruppe sind, L² und L³ unabhängig voneinander gleich oder verschieden ein π-Ligand sind, B unabhängig voneinander gleich oder verschieden je eine zweiwertige verbrückende Einheit sind, X unabhängig voneinander gleich oder verschieden sind und für ein Wasserstoffatom, ein Halogenatom, einen C₁-C₁₀-Fluorkohlenstoffrest oder einen kohlenwasserstoffhaltigen Rest mit 1-40 C-Atomen stehen, und k eine ganze Zahl von 0 bis 10 ist.

6. Verfahren gemäß Anspruch 5, worin mindestens ein Olefin der Formel R^{a}-CH = CH-R^{b} polymerisiert wird, worin R^{a} und R^{b} gleich oder verschieden sind und ein Wasserstoffatom oder einen Kohlenwasserstoffrest mit 1 bis 20 Kohlenstoffatomen bedeuten, oder R^{a} und R^{b} zusammen mit den sie verbindenden Atomen einen oder mehrere Ringe bilden.

7. Verwendung einer Katalysatorkomponente gemäß Anspruch 3 oder 4 zur Olefinpolymerisation.
